# DEMANDE DE BREVET EUROPEEN

(11) **EP 4 477 826 A1**
(43) Date de publication de la demande: **18.12.2024**
(21) Numéro de dépôt: 24181824.4
(22) Date de dépôt: 12.06.2024
(51) Int. Cl.: E05B 83/38, B60J 5/04

(54) **COMMANDE D'OUVERTURE INTERNE POUR VÉHICULE AUTOMOBILE À PORTES ANTAGONISTES**

(30) Priorité: 16.06.2023 FR 2306164
(71) Demandeur: Renault s.a.s, 92100 Boulogne Billancourt (FR)
(72) Inventeur: MINSSEN, Eric, 78280 GUYANCOURT (FR)

(57) **Abrégé**

La présente invention concerne un véhicule automobile (1) comprenant un ouvrant avant (8) et un ouvrant arrière (10) antagonistes, ces ouvrants (8, 10) étant configurés pour prendre une première position fermée et une deuxième position ouverte, le véhicule automobile (1) comprenant un dispositif d'ouverture (18) des ouvrants (8, 10) comprenant un moyen de verrouillage de l'ouvrant avant (8) disposé sur l'ouvrant avant (8), un organe de commande (32) configuré pour commander le moyen de verrouillage, le dispositif d'ouverture (18) comprenant au moins un organe de verrouillage (20, 20A, 20B) de l'ouvrant arrière (10) disposé sur l'ouvrant arrière (10), le dispositif d'ouverture (18) comprenant un moyen d'actionnement (26) de l'organe de commande (32) et de l'organe de verrouillage (20, 20A, 20B), ce moyen d'actionnement (26) étant disposé sur l'ouvrant arrière (10).

## Description

La présente invention concerne le domaine des véhicules automobiles à ouvrants antagonistes, et plus particulièrement des mécanismes d'ouverture des ouvrants de tels véhicules automobiles.

Les ouvrants antagonistes, ou portes antagonistes, correspondent à des ouvrants latéraux d'un véhicule automobile qui s'ouvrent en regard l'un de l'autre. Par exemple, l'ouvrant avant s'ouvre en pivotant autour d'un axe disposé à l'avant de cet ouvrant avant, tandis que l'ouvrant arrière s'ouvre en pivotant autour d'un axe disposé à l'arrière de cet ouvrant arrière, les qualifications « avant » et « arrière » des ouvrants étant appréciées par rapport à un avant et un arrière du véhicule automobile.

L'ouvrant avant et l'ouvrant arrière peuvent reposer, lorsqu'ils sont fermés, sur un pied milieu du véhicule automobile. Toutefois, certains véhicules automobiles ne présentent pas un tel pied milieu, de sorte à permettre un large accès à un habitacle du véhicule automobile et notamment à faciliter l'installation des passagers au sein de cet habitacle.

Pour ces véhicules, l'ouvrant avant est usuellement refermé au moins partiellement sur l'ouvrant arrière. Il est ainsi nécessaire que, lors de la fermeture des ouvrants, l'ouvrant arrière soit fermé préalablement à l'ouvrant avant, et à l'inverse que lors de leur ouverture l'ouvrant avant soit ouvert préalablement à l'ouvrant arrière.

À cet effet, le conducteur ou passager installé à l'avant peut actionner l'ouvrant avant, puis une fois sorti du véhicule actionner l'ouvrant arrière pour libérer un passager installé à l'arrière. Une telle organisation requiert cependant l'intervention d'une tierce personne pour permettre à un passager installé à l'arrière de sortir du véhicule. Alternativement, le passager installé à l'arrière peut se pencher au sein du véhicule jusqu'à atteindre une poignée intérieure commandant l'ouvrant avant, puis ouvrir de lui-même l'ouvrant arrière. Ces deux solutions ne sont cependant pas satisfaisantes car elles manquent de praticité pour le passager installé à l'arrière du véhicule.

La présente invention vise à pallier cet inconvénient en proposant un véhicule automobile au sein duquel l'ouverture des ouvrants antagonistes est facilitée pour un usager passager arrière du véhicule automobile, ce passager arrière pouvant commander une ouverture de l'ouvrant avant depuis le siège arrière.

La présente invention a ainsi pour principal objet un véhicule automobile comprenant une caisse et deux ouvrants latéraux antagonistes montés sur la caisse parmi lesquels un ouvrant avant et un ouvrant arrière, ces ouvrants étant configurés pour prendre une première position dans laquelle ils sont fermés et une deuxième position dans laquelle ils sont ouverts, le véhicule automobile comprenant un dispositif d'ouverture des ouvrants comprenant un moyen de verrouillage de l'ouvrant avant disposé sur l'ouvrant avant et en prise sur l'ouvrant arrière lorsque les ouvrants sont dans leur première position, un organe de commande configuré pour commander le moyen de verrouillage, le dispositif d'ouverture comprenant au moins un organe de verrouillage de l'ouvrant arrière disposé sur l'ouvrant arrière et en prise sur la caisse lorsque l'ouvrant arrière est dans sa première position, le dispositif d'ouverture comprenant un moyen d'actionnement de l'organe de commande et de l'organe de verrouillage, ce moyen d'actionnement étant disposé sur l'ouvrant arrière.

Le véhicule automobile selon l'invention comporte deux ouvrants antagonistes, qui sont montés pivotants sur une caisse du véhicule. Le véhicule automobile comprend par exemple deux ouvrants antagonistes de son côté latéral droit et deux ouvrants antagonistes de son côté latéral gauche. De tels ouvrants antagonistes présentent des points de pivotement respectivement disposés sur la caisse à des extrémités opposées à une portion centrale du véhicule automobile au niveau de laquelle les ouvrants se rejoignent.

L'ouvrant avant comme l'ouvrant arrière est configuré pour prendre soit une première position ou position fermée, soit une deuxième position ou position ouverte, un passage de l'une à l'autre des positions étant opéré par un pivotement de l'ouvrant. On considère que l'ouvrant est dans sa deuxième position dès lors qu'il n'est pas fermé, c'est-à-dire dès qu'une serrure de cet ouvrant est libéré. Il existe ainsi une pluralité de positionnements de l'ouvrant lorsqu'il est dans sa deuxième position, chacun de ces positionnements correspondant à un angle d'inclinaison différent de l'ouvrant par rapport à une direction d'extension principale du véhicule automobile.

Un dispositif d'ouverture des ouvrants est configuré pour faire passer les ouvrants de leur première position à leur deuxième position, c'est-à-dire pour les ouvrir. Ce dispositif d'ouverture permet d'ouvrir à la fois l'ouvrant avant et l'ouvrant arrière en une seule opération de manipulation par un passager installé à l'arrière du véhicule automobile selon l'invention.

Dans la première position des ouvrants, l'ouvrant avant est verrouillé sur l'ouvrant arrière tandis que cet ouvrant arrière est lui-même verrouillé sur la caisse du véhicule automobile. Plus particulièrement, l'ouvrant avant comprend à cet effet un moyen de verrouillage qui est en prise sur l'ouvrant arrière, tandis que l'ouvrant arrière comprend au moins un organe de verrouillage en prise sur la caisse.

Le moyen de verrouillage et l'organe de verrouillage sont déverrouillés par un même moyen d'actionnement du dispositif d'ouverture ; le déverrouillage de l'organe de verrouillage s'opère directement par le moyen d'actionnement, alors que le déverrouillage du moyen de verrouillage comprend un organe de commande intermédiaire. En d'autres termes, pour déverrouiller l'ouvrant avant, la mise en oeuvre du moyen d'actionnement induit la mise en oeuvre de l'organe de commande, qui déverrouille le moyen de verrouillage.

Soit le moyen d'actionnement agit directement sur l'organe de commande de façon mécanique, soit ce moyen d'actionnement agit par l'intermédiaire d'un réseau électrique du véhicule automobile qui fait passer une demande d'ouverture émise par le moyen d'actionnement à un calculateur avant d'opérer le déverrouillage du moyen de verrouillage.

Le moyen d'actionnement est disposé sur l'ouvrant arrière. Du fait d'une telle disposition, le moyen d'actionnement est directement accessible pour le passager arrière qui peut ainsi commander l'ouverture des deux ouvrants depuis son siège arrière.

Selon une caractéristique optionnelle de l'invention, le véhicule automobile est dépourvu de pied milieu entre les deux ouvrants.

En d'autres termes, le véhicule automobile ne comprend pas de longeron central sur lequel reposeraient les ouvrants dans leur position fermée. Dans cette position fermée de chacun des deux ouvrants, l'ouvrant avant est au moins partiellement en recouvrement de l'ouvrant arrière de sorte que son moyen de verrouillage soit en prise sur l'ouvrant arrière.

Selon une caractéristique optionnelle de l'invention, l'organe de commande est disposé sur l'ouvrant avant.

Selon une caractéristique optionnelle de l'invention, l'ouvrant avant comprend une feuillure avant et une feuillure arrière, l'organe de commande étant disposé plus proche de la feuillure arrière que de la feuillure avant.

La disposition des feuillures avant et arrière de l'ouvrant avant est appréciée par rapport à un avant et un arrière du véhicule automobile. La présence de l'organe de commande au voisinage de la feuillure arrière le rapproche de l'ouvrant arrière, et par extension du moyen d'actionnement porté par cet ouvrant arrière.

Selon une caractéristique optionnelle de l'invention, l'au moins un organe de verrouillage comprend un premier organe de verrouillage et un deuxième organe de verrouillage, le premier organe de verrouillage étant disposé sur un bord supérieur de l'ouvrant arrière et le deuxième organe de verrouillage étant disposé sur un bord inférieur, le bord supérieur étant disposé au-dessus du bord inférieur relativement à une direction verticale sensiblement parallèle à une direction perpendiculaire au sol sur lequel repose le véhicule automobile.

Le premier organe de verrouillage et le deuxième organe de verrouillage sont ainsi opposés verticalement. Cette disposition des organes de verrouillage permet, dans la première position de l'ouvrant arrière, de le solidariser à la caisse du véhicule en deux points distincts, de sorte à répartir les efforts sur la caisse et à assurer une solidarisation plus fiable.

Selon une caractéristique optionnelle de l'invention, l'ouvrant arrière comprend une feuillure avant et une feuillure arrière, le moyen d'actionnement étant disposé plus proche de la feuillure avant que de la feuillure arrière.

Similairement à ce qui a été précisé pour l'ouvrant avant, la disposition des feuillures avant et arrière de l'ouvrant arrière est appréciée par rapport à l'avant et à l'arrière du véhicule automobile.

Selon une caractéristique optionnelle de l'invention, l'ouvrant avant comprend une commande d'ouverture interne plus proche de la feuillure avant que de la feuillure arrière.

Cette commande d'ouverture interne est notamment une poignée d'ouverture disposée de façon classique dans une zone facilement accessible pour un passager installé à l'avant du véhicule, à savoir plus proche de la feuillure avant de l'ouvrant avant que de sa feuillure arrière.

Selon une caractéristique optionnelle de l'invention, l'organe de commande contrôle électriquement le moyen de verrouillage.

L'organe de commande est notamment un bouton poussoir actionné par le moyen d'actionnement. Alternativement, l'organe de commande prend la forme d'un détecteur magnétique, par exemple un capteur à effet Hall.

Selon une caractéristique optionnelle de l'invention, l'organe de commande contrôle mécaniquement le moyen de verrouillage.

L'organe de commande contrôle par exemple le moyen de verrouillage par le biais d'un système à câbles et à tringles.

Selon une caractéristique optionnelle de l'invention, le dispositif d'ouverture comprend un moyen de décalage temporel entre l'actionnement de l'organe de commande et l'actionnement de l'organe de verrouillage.

Ce moyen de décalage temporel permet de s'assurer que, lors du passage des ouvrants de leur première position à leur deuxième position, l'ouvrant avant s'ouvre préalablement à l'ouvrant arrière. Autrement, l'ouverture de l'ouvrant arrière serait empêchée par l'ouvrant avant qui est en prise sur lui.

L'invention concerne en outre un procédé d'ouverture des ouvrants d'un véhicule automobile tel qu'évoqué précédemment, comprenant une première étape d'actionnement de l'organe de commande puis une deuxième étape d'actionnement de l'organe de verrouillage.

Les première et deuxième étapes d'actionnement sont toutes deux mises en oeuvre par le moyen d'actionnement. Un délai de traitement entre la première étape d'actionnement et la deuxième étape d'actionnement est par exemple de l'ordre de quelques dixièmes de secondes, de façon que l'ouvrant avant soit ouvert en premier et l'ouvrant arrière soit ouvert en deuxième. Le délai de traitement est notamment réalisé par le moyen de décalage temporel du dispositif d'ouverture.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, une vue de profil d'un véhicule automobile selon l'invention, présentant deux ouvrants antagonistes dont un ouvrant avant et un ouvrant arrière ;
[Fig. 2] illustre, schématiquement, les ouvrants antagonistes vus de l'intérieur du véhicule automobile de la figure 1, ces ouvrants antagonistes étant représentés selon un premier mode de réalisation ;
[Fig. 3] illustre, schématiquement, les ouvrants antagonistes vus de l'intérieur du véhicule automobile de la figure 1, ces ouvrants antagonistes étant représentés selon un deuxième mode de réalisation ;
[Fig. 4] illustre, schématiquement, l'ouvrant arrière du véhicule selon le deuxième mode de réalisation, vu de l'intérieur du véhicule automobile de la figure 1.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « verticale » et « transversale » se réfèrent à l'orientation du véhicule automobile selon l'invention. Une direction longitudinale correspond à une direction d'extension principale du véhicule automobile, cette direction longitudinale étant parallèle à un axe longitudinal L d'un repère L, V, T illustré sur les figures. Une direction verticale correspond à une direction sensiblement perpendiculaire à un sol sur lequel repose le véhicule automobile, cette direction verticale étant parallèle à un axe vertical V du repère L, V, T et cet axe vertical V étant perpendiculaire à l'axe longitudinal L. Enfin, une direction transversale correspond à une direction parallèle à un axe transversal T du repère L, V, T, cet axe transversal T étant perpendiculaire à l'axe longitudinal L et à l'axe vertical V.

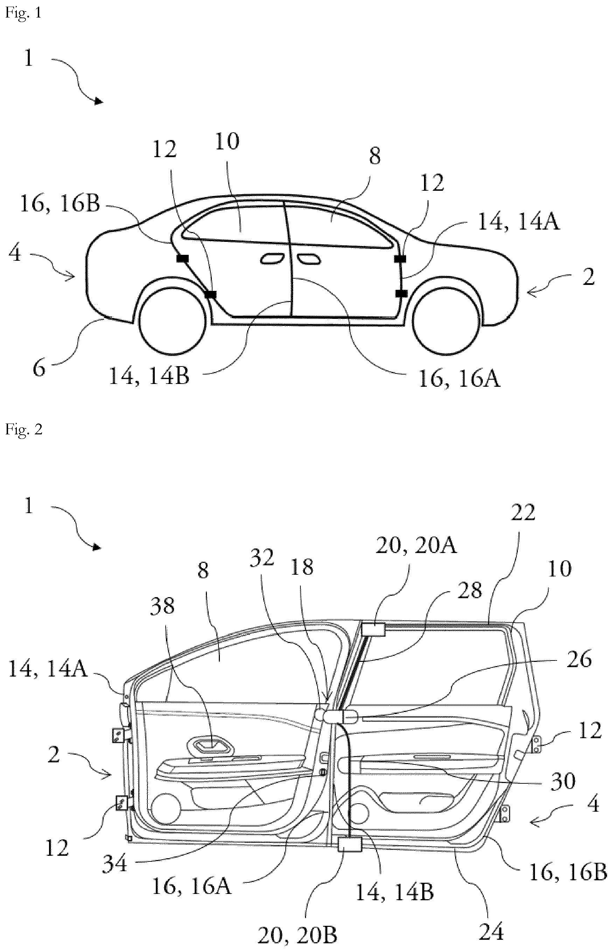

La figure 1 illustre ainsi, schématiquement, un véhicule automobile 1 selon l'invention, ce véhicule automobile 1 étant représenté depuis l'extérieur selon une vue de profil. Le véhicule automobile 1 s'étend selon une direction d'extension principale qui correspond à une direction longitudinale L. Le véhicule automobile 1 est délimité, le long de cette direction longitudinale, par une première extrémité longitudinale 2 et une deuxième extrémité longitudinale 4. La première extrémité longitudinale 2 correspond à un avant du véhicule automobile 1, notamment en regard d'un poste de conduite de ce véhicule automobile 1, tandis que la deuxième extrémité longitudinale 4 correspond à son arrière, en regard d'un coffre du véhicule automobile 1 par exemple.

Le véhicule automobile 1 comprend une caisse 6 qui est un élément structurel sur lequel reposent des ouvrants 8, 10 du véhicule automobile 1. Le véhicule automobile 1 comprend, au titre de ces ouvrants 8, 10, au moins un ouvrant avant 8 et un ouvrant arrière 10. On comprend que l'ouvrant avant 8 est plus proche de la première extrémité longitudinale 4 que l'ouvrant arrière 10, et inversement que cet ouvrant arrière 10 est plus proche de la deuxième extrémité longitudinale 6 que l'ouvrant avant 8. Le véhicule automobile 1 comprend plus précisément deux ouvrants avant 8 et deux ouvrants arrière 10, disposés deux par deux de chaque côté latéral du véhicule automobile 1. Dans ce qui va suivre, les éléments décrits en relation avec une paire d'ouvrants 8, 10, soit un ouvrant avant 8 et un ouvrant arrière 10 disposés d'un côté latéral donné, sont applicables aux ouvrants 8 et 10 disposés de l'autre côté du véhicule automobile 1.

Les ouvrants 8, 10 sont plus spécifiquement des ouvrants antagonistes, c'est-à-dire des ouvrants qui s'ouvrent en regard l'un de l'autre et se rejoignent en une portion centrale du véhicule automobile 1, une telle portion centrale étant appréciée relativement à la direction longitudinale L. Les ouvrants 8, 10 sont montés pivotants sur la caisse 6 ; ainsi, l'ouvrant avant 8 présente un axe de pivotement vers la première extrémité longitudinale 2 du véhicule automobile 1, tandis que l'ouvrant arrière 10 présente un axe de pivotement vers sa deuxième extrémité longitudinale 4. Chacun des ouvrants 8, 10 pivote par rapport à la caisse 6 par l'intermédiaire de charnières 12, qui sont illustrées sous forme schématique à la figure 1.

Du fait de ce pivotement des ouvrants 8, 10 relativement à la caisse 6, l'ouvrant avant et l'ouvrant arrière 10 présentent chacun une première position dans laquelle ils sont fermés et une deuxième position dans laquelle ils sont ouverts. La première position est ainsi une position fermée et la deuxième position une position ouverte. On considère ici que les ouvrants 8, 10 présentent une unique position fermée, et qu'ils sont dans leur position ouverte dès lors qu'ils n'adoptent pas cette position fermée. Dans la première position ou position fermée, les ouvrants 8, 10 sont verrouillés l'un par rapport à l'autre et/ou par rapport à la caisse 6 du véhicule automobile 1.

Chacun des ouvrants 8, 10 comprend une feuillure avant 14 et une feuillure arrière 16, qui correspondent à des tranches de l'ouvrant 8. Plus particulièrement, l'ouvrant avant 8 comprend une feuillure avant 14A en regard de la première extrémité longitudinale 2 et une feuillure arrière 16A en regard de la deuxième extrémité longitudinale 4, et similairement l'ouvrant arrière 10 présente une feuillure avant 14B en regard de la première extrémité longitudinale 2 et une feuillure arrière 16B en regard de la deuxième extrémité longitudinale 4.

Le véhicule automobile 1 est dépourvu de pied milieu entre les ouvrants 8, 10, de sorte que dans la première position des ouvrants 8, 10, la feuillure arrière 16A de l'ouvrant avant 8 est ainsi en regard de la feuillure avant 14B de l'ouvrant arrière 10 et au contact de celle-ci. En outre, la feuillure avant 14A de l'ouvrant avant 8 et la feuillure arrière 16B de l'ouvrant arrière 10 sont porteuses des charnières 12 qui autorisent le pivotement de chacun de ces ouvrants 8, 10.

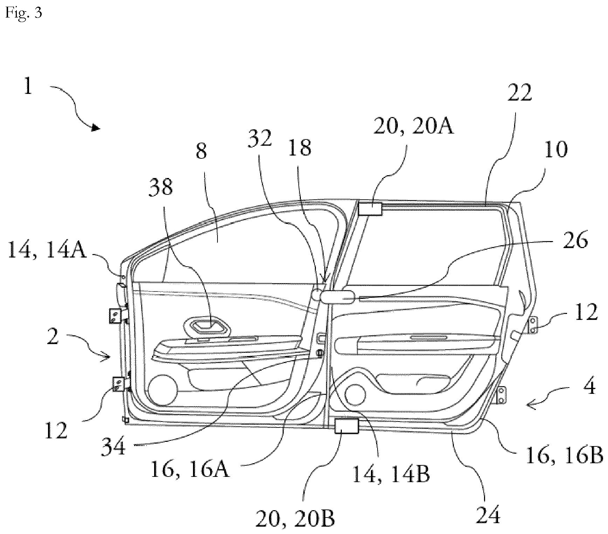

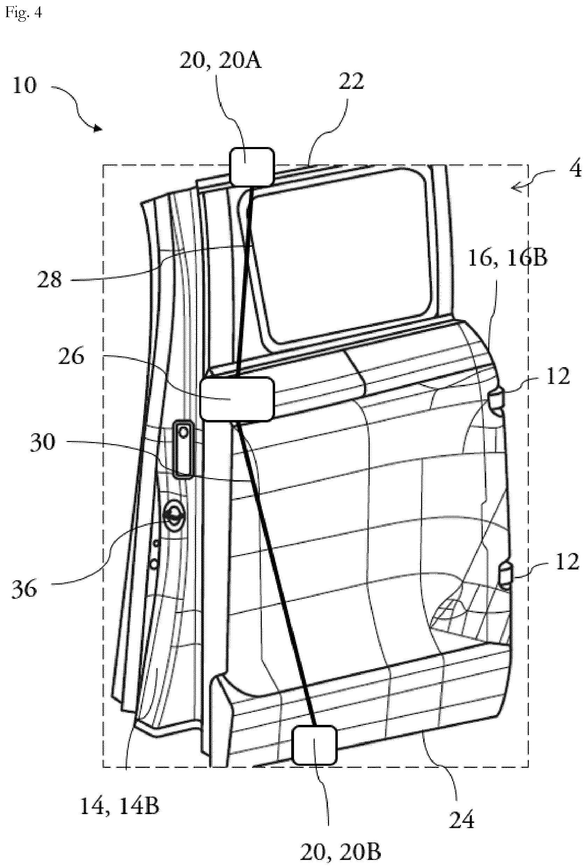

Selon l'invention, le passage de l'ouvrant avant 8 et de l'ouvrant arrière 10 de leur première position à leur deuxième position est mis en oeuvre par un dispositif d'ouverture 18 des ouvrants 8, 10. Un tel dispositif d'ouverture 14 va maintenant être décrit en relation avec les figures 2 à 4. Un premier mode de réalisation de ce dispositif d'ouverture 18 est illustré aux figures 2 et 4, tandis qu'un deuxième mode de réalisation est représenté en figure 3.

Le dispositif d'ouverture 18 s'étend, au moins partiellement, à la fois sur l'ouvrant avant 8 et sur l'ouvrant arrière 10. Le dispositif d'ouverture 18 est plus spécifiquement disposé, au moins en partie, au sein d'une épaisseur de l'ouvrant avant 8 et de l'ouvrant arrière 10, c'est-à-dire entre leurs faces internes qui délimitent un habitacle du véhicule automobile 1 et leurs faces externes qui correspondent à une carrosserie extérieure du véhicule automobile 1. Aux figures 2 et 3 notamment, à des fins d'illustration le dispositif d'ouverture 18 est représenté au premier plan, c'est-à-dire devant les ouvrants 8, 10 ; on comprend qu'en réalité, le dispositif d'ouverture 18 est recouvert, au moins partiellement, par des garnitures de ces ouvrants 8, 10.

Le dispositif d'ouverture 18 comprend, au niveau de l'ouvrant arrière 10, au moins un organe de verrouillage 20. Plus précisément, le dispositif d'ouverture comprend ici au titre de cet au moins un organe de verrouillage 20 à la fois un premier organe de verrouillage 20A et un deuxième organe de verrouillage 20B, tel que cela est visible aux figures 2 et 3. Au sein de l'ouvrant arrière 10, les premier et deuxième organes de verrouillage 20A, 20B sont opposés selon une direction verticale V perpendiculaire au sol sur lequel repose le véhicule automobile 1. Ainsi, le premier organe de verrouillage 20A est disposé sur un bord supérieur 22 de l'ouvrant arrière 10 alors que le deuxième organe de verrouillage 20B est disposé sur un bord inférieur 24 de celui-ci, le bord inférieur 24 étant plus proche du sol que le bord supérieur 22. Les organes de verrouillage 20A, 20B sont des serrures qui permettent de solidariser l'ouvrant arrière 10 à la caisse 6 du véhicule automobile 1. Chacun du premier organe de verrouillage 20A et du deuxième organe de verrouillage 20B est à cet effet en prise sur la caisse 6 dans la première position de l'ouvrant arrière 10. Les organes de verrouillage 20A, 20B présentent par exemples des pênes qui s'engagent dans des gâches de la caisse 6.

Dans un état verrouillé des organes de verrouillage 20A, 20B, qui correspond à la première position ou position fermée de l'ouvrant arrière 10, les organes de verrouillage 20A, 20B sont en prise sur la caisse 6. Inversement, dans un état déverrouillé des organes de verrouillage 20A, 20B, qui correspond à la deuxième position ou position ouverte de l'ouvrant arrière 10, les organes de verrouillage 20A, 20B ne sont pas en prise sur la caisse 6.

Les organes de verrouillage 20A, 20B sont actionnés par un moyen d'actionnement 26 du dispositif d'ouverture 18. Autrement dit, le moyen d'actionnement 26 permet le passage des organes de verrouillage 20A, 20B de leur état verrouillé à leur état déverrouillé. Ce moyen d'actionnement 26 est disposé sur l'ouvrant arrière 10. Il correspond par exemple à une poignée interne de l'ouvrant arrière 10. Le moyen d'actionnement 26 est plus particulièrement disposé plus proche de la feuillure avant 14B de l'ouvrant arrière 10 que de sa feuillure arrière 16B. Par ailleurs, le moyen d'actionnement 26 est disposé en une partie centrale de l'ouvrant arrière 10 selon la direction verticale V, soit à distance à la fois du bord supérieur 22 et du bord inférieur 20.

Dans le premier mode de réalisation, c'est-à-dire le mode de réalisation illustré à la figure 2 et à la figure 4, le moyen d'actionnement 26 commande mécaniquement le premier organe de verrouillage 20A et le deuxième organe de verrouillage 20B. Le moyen d'actionnement 26 est par exemple relié à chacun de ces organes de verrouillage 20A, 20B par l'intermédiaire de câbles et de gaines ainsi que de tringles. Le dispositif d'ouverture 18 comprend ici un premier câble 28 reliant mécaniquement et physiquement le moyen d'actionnement 26 au premier organe de verrouillage 20A et un deuxième câble 30 reliant ce moyen d'actionnement 26 au deuxième organe de verrouillage 20B.

Dans le deuxième mode de réalisation, représenté à la figure 3, le moyen d'actionnement 26 commande électriquement le premier organe de verrouillage 20A et le deuxième organe de verrouillage 20B, par le biais d'un système électrique du véhicule automobile 1. Dans ce deuxième mode de réalisation, soit le dispositif d'ouverture ne comprend pas les câbles 28, 30, soit ces câbles 28, 30 correspondent à un dispositif de secours en cas de dysfonctionnement du système électrique.

Outre l'au moins un organe de verrouillage 20, le moyen d'actionnement 26 est configuré pour actionner un organe de commande 32 du dispositif d'ouverture, cet organe de commande 32 commandant lui-même un moyen de verrouillage 34 du dispositif d'ouverture 18. Une telle commande de l'organe de commande 32 par le moyen d'actionnement 26 est notamment une commande électrique. Le moyen de verrouillage 34 est similaire aux organes de verrouillage 20 en ce qu'il correspond à une serrure pour l'ouvrant avant 8.

Le moyen de verrouillage 34 est porté par l'ouvrant avant 8, plus particulièrement par sa feuillure arrière 16A. Le moyen de verrouillage 34 de l'ouvrant avant 8 est en prise sur l'ouvrant arrière 10. Il correspond par exemple à un pêne qui vient se loger dans une gâche 36 équipant la feuillure avant 14B de l'ouvrant arrière 10, une telle gâche 36 étant visible à la figure 4. Dans un état verrouillé du moyen de verrouillage 34, qui correspond à la première position ou position fermée de l'ouvrant avant 8, ce moyen de verrouillage 8 est en prise sur l'ouvrant arrière 10. Inversement, dans un état déverrouillé du moyen de verrouillage 34, qui correspond à la deuxième position ou position ouverte de l'ouvrant arrière 10, le moyen de verrouillage 34 n'est pas en prise sur l'ouvrant arrière 10. Il résulte de ce qui précède que dans la première position ou position fermée de l'ouvrant avant 8, celui-ci est en prise dans l'ouvrant arrière 10.

Tel que cela a été évoqué précédemment, le moyen de verrouillage 34 de l'ouvrant avant 8 est commandé par l'intermédiaire de l'organe de commande 32. Selon les modes de réalisation, soit l'organe de commande 32 contrôle électriquement le moyen de verrouillage 34, soit il le commande mécaniquement. Lorsque l'organe de commande 32 contrôle le moyen de verrouillage 34 de façon électrique, cet organe de commande peut être un bouton poussoir ou bien un détecteur magnétique, notamment un capteur à effet Hall. Au contraire, lorsque l'organe de commande 32 contrôle le moyen de verrouillage 34 de façon mécanique, l'organe de commande 34 est par exemple relié au moyen de verrouillage par l'intermédiaire d'un système de câbles et de tringles.

Lorsque l'organe de commande 32 contrôle électriquement le moyen de verrouillage 34, il peut être disposé n'importe où au sein du véhicule automobile 1. Ici, l'organe de commande 32 est disposé sur l'ouvrant avant 8. Plus précisément, l'organe de commande 32 est disposé plus proche de la feuillure arrière 16A de l'ouvrant avant 8 que de sa feuillure avant 14A. En présence d'un contrôle mécanique du moyen de verrouillage 34, cela permet de réduire un encombrement du système de câbles et de tringles reliant l'organe de commande 32 à ce moyen de verrouillage 34 qui est disposé au sein de la feuillure arrière 16A de l'ouvrant avant 8. L'organe de commande 32 est par ailleurs disposé en une partie centrale de l'ouvrant avant 8 relativement à la direction verticale V. L'organe de commande 32 porté par l'ouvrant avant 8 est de ce fait sensiblement en regard du moyen d'actionnement 26 porté par l'ouvrant arrière 10, de sorte à faciliter un actionnement de l'organe de commande 32 par le moyen d'actionnement 26.

L'ouvrant avant 8 comprend en outre une commande d'ouverture interne 38, qui correspond à une poignée de porte interne au véhicule automobile 1 pouvant être utilisée par un conducteur ou passager avant du véhicule automobile 1 pour faire passer l'ouvrant avant 8 de sa première position à sa deuxième position. Plus précisément, la commande d'ouverture interne 38 est configurée pour faire passer le moyen de verrouillage 34 de son état verrouillé dans lequel il est en prise dans l'ouvrant arrière 10 à son état déverrouillé.

Cette commande d'ouverture interne 38 est disposée plus proche de la feuillure avant 14A de l'ouvrant avant 8 que de sa feuillure arrière 16A lorsqu'un siège avant du véhicule automobile 1 est orienté vers la première direction longitudinale 2 de celui-ci, et à l'inverse la commande d'ouverture interne 38 est plus proche de la feuillure arrière 16A de l'ouvrant avant 8 que de la feuillure avant 14A lorsque le siège avant est orienté vers la deuxième direction longitudinale 4.

La commande d'ouverture interne 38 est distincte du dispositif d'ouverture 18 en ce qu'elle peut être actionnée indépendamment de celui-ci pour déverrouiller le moyen de verrouillage 34. De la sorte, l'ouvrant avant 8 passe de sa première position à sa deuxième position alors que l'ouvrant arrière 10 reste dans sa première position. En d'autres termes, la commande d'ouverture interne 38 permet l'ouverture de l'ouvrant avant 8 uniquement.

Dans certains modes de réalisation de l'invention, le véhicule automobile 1 est équipé d'un dispositif de gestion d'un contact entre les ouvrants 8, 10 lors du passage de ces ouvrants 8, 10 de leur première position à leur deuxième position. Le dispositif de gestion de contact est destiné à gérer les frottements entre l'ouvrant avant 8 et l'ouvrant arrière 10. Le dispositif de gestion de contact 18 comprend à cet effet deux portions disposées chacune sur l'un des ouvrants 8, 10, avec plus précisément une portion élastiquement déformable solidaire de l'un des ouvrants 8, 10 et une portion de frottement solidaire de l'autre ouvrant 8, 10. La portion élastiquement déformable et la portion de frottement sont au contact l'une de l'autre dans la première position ou position fermée des ouvrants 8, 10, et elles coopèrent l'une avec l'autre lors du passage des ouvrants 8, 10 de leur première position à leur deuxième position ou position ouverte. Une telle coopération permet de limiter les risques de détérioration des ouvrants 8, 10 au contact l'un de l'autre, notamment lors de frottements de la feuillure arrière 16A de l'ouvrant avant 8 contre la feuillure avant 14B de l'ouvrant arrière 10.

La portion élastiquement déformable permet d'éloigner la feuillure arrière 16A de l'ouvrant avant 8 et/ou la feuillure avant 14B de l'ouvrant arrière 10 de la caisse 6, par un pivotement des ouvrants 8, 10 autour de leurs points de pivotement grâce à leurs charnières 12 disposées respectivement au niveau de la feuillure avant 14A pour l'ouvrant avant 8 et de la feuillure arrière 16B pour l'ouvrant arrière 10.

Une déformation de la portion élastiquement déformable correspond à son passage d'une première configuration de repos à une deuxième configuration rétractée, et inversement à son passage de la deuxième configuration rétractée à la première configuration de repos. La portion élastiquement déformable est par exemple un doigt d'éjection à une extrémité duquel est disposé un galet tournant destiné à rouler contre la portion de frottement, ou encore une lame ressort.

Un procédé d'ouverture des ouvrants 8, 10 par le dispositif d'ouverture 18 du véhicule automobile 1 selon l'invention va maintenant être décrit. Un tel procédé d'ouverture permet de faire passer à la fois l'ouvrant avant 8 et l'ouvrant arrière 10 de leur première position à leur deuxième position, de façon simplifiée pour un passager installé à l'arrière du véhicule automobile 1.

Le procédé d'ouverture des ouvrants 8, 10 débute par une étape de manipulation, par un utilisateur du véhicule automobile 1, du moyen d'actionnement 26. Lorsque ce moyen d'actionnement 26 est une poignée intérieure de l'ouvrant arrière 10, cela correspond notamment à tirer cette poignée intérieure.

La manipulation du moyen d'actionnement 26 entraîne une première étape d'actionnement de l'organe de commande 32, qui est suivie d'une deuxième étape d'actionnement du premier organe de verrouillage 20A et du deuxième organe de verrouillage 20B concomitamment. Ainsi, la manipulation du moyen d'actionnement 26 permet dans un premier temps d'actionner l'organe de commande 32, qui contrôle le moyen de verrouillage de l'ouvrant avant 8 pour le faire passer de son état verrouillé à son état déverrouillé et à ce titre libérer l'ouvrant avant 8 de l'ouvrant arrière. En d'autres termes, l'ouvrant avant 8 passe de sa première position fermée à sa deuxième position ouverte. Dans un second temps, la manipulation du moyen d'actionnement 26 permet d'actionner l'au moins un organe de verrouillage 20, ici le premier organe de verrouillage 20A et le deuxième organe de verrouillage 20B qui sont tous deux actionnés en même temps. Cet actionnement les fait passer de leur état verrouillé à leur état déverrouillé, et par extension permet de faire passer l'ouvrant arrière 10 de sa première position fermée à sa deuxième position ouverte.

À titre d'exemple, lors de la manipulation de la poignée intérieure correspondant au moyen d'actionnement 26 de l'ouvrant arrière 10, celle-ci actionne d'abord en début de course le bouton poussoir correspondant à l'organe de commande 32, puis dans une poursuite de course elle tire à la fois sur le premier câble 28 et le deuxième câble 30 pour déverrouiller respectivement le premier organe de verrouillage 20A et le deuxième organe de verrouillage 20B.

L'ouvrant avant 8 étant en prise sur l'ouvrant arrière 10 lorsqu'ils sont tous deux dans la première position, l'ordre d'actionnement de l'organe de commande 32 et des organes de verrouillage 20A, 20B ne peut être modifié. À défaut, en présence d'un actionnement des organes de verrouillage 20A, 20B préalablement à celui de l'organe de commande 32, les ouvrants 8, 10 ne pourraient pas s'ouvrir. Pour s'assurer qu'un ordre d'actionnement de l'organe de commande 32 avant les organes de verrouillage 20A, 20B est respecté, le dispositif d'ouverture 18 comprend par exemple un moyen de décalage temporel entre l'actionnement de l'organe de commande 32 et des organes de verrouillage 20A, 20B. Un tel moyen de décalage temporel, ou temporisateur, permet notamment de retarder l'actionnement des organes de verrouillage 20A, 20B de quelques dixièmes de secondes par rapport à l'actionnement de l'organe de commande 32.

Une fois que l'organe de commande 32 et les organes de verrouillage 20A, 20B ont été actionnés par le moyen d'actionnement 26, à la fois ces organes de verrouillage 20A, 20B et le moyen de verrouillage 34 de l'ouvrant avant 8 sont dans leur état déverrouillé. L'ouvrant avant 8 et l'ouvrant arrière 10 sont alors encore au contact l'un de l'autre ; par exemple, les ouvrants 8, 10 présentent un angle d'ouverture compris entre 5 et 10 °. Le passager arrière peut pousser l'ouvrant arrière 10 pour chasser l'ouvrant avant 8 et s'extirper du véhicule automobile 1. Alternativement, le véhicule automobile 1 comprend un système de motorisation des ouvrants 8, 10, de sorte que dès que les ouvrants 8, 10 sont passés de leur première position à leur deuxième position, une poursuite de course d'ouverture des ouvrants 8, 10 est gérée de façon motorisée. Cela permet de limiter les efforts nécessaires à l'usager du véhicule automobile 1 pour ouvrir les ouvrants 8, 10.

Pour les modes de réalisation dans lesquels le véhicule automobile 1 est équipé du dispositif de gestion de contact entre les ouvrants 8, 10, au cours du passage de la première position des ouvrants 8, 10 à leur deuxième position le passager effectue une poussée sur l'ouvrant 8, 10 à côté duquel il est assis. Pour un passager arrière, la poussée est effectuée sur l'ouvrant arrière 10. L'ouvrant arrière 10 chasse alors l'ouvrant avant 8, la portion élastiquement déformable frottant contre la portion de frottement. Au cours d'un tel frottement, la portion élastiquement déformable est dans sa deuxième configuration rétractée. Lorsque la poussée de l'ouvrant arrière 10 sur l'ouvrant avant 8 est suffisante, les ouvrants 8, 10 se séparent l'un de l'autre. En l'absence de contrainte ou de pression exercée contre la portion de frottement, la portion élastiquement déformable reprend sa première configuration de repos. Le passager peut alors s'extraire du véhicule automobile 1.

La présente invention propose ainsi un véhicule automobile au sein duquel une ouverture d'un ouvrant avant et d'un ouvrant arrière, qui sont antagonistes, est effectuée par l'intermédiaire d'un moyen d'actionnement aisément accessible pour un usager passager arrière du véhicule automobile, un tel moyen d'actionnement permettant l'ouverture à la fois de l'ouvrant avant et de l'ouvrant arrière.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Véhicule automobile (1) comprenant une caisse (6) et deux ouvrants (8, 10) latéraux antagonistes montés sur la caisse (6) parmi lesquels un ouvrant avant (8) et un ouvrant arrière (10), ces ouvrants (8, 10) étant configurés pour prendre une première position dans laquelle ils sont fermés et une deuxième position dans laquelle ils sont ouverts, le véhicule automobile (1) comprenant un dispositif d'ouverture (18) des ouvrants (8, 10) comprenant un moyen de verrouillage (34) de l'ouvrant avant (8) disposé sur l'ouvrant avant (8) et en prise sur l'ouvrant arrière (10) lorsque les ouvrants (8, 10) sont dans leur première position, un organe de commande (32) configuré pour commander le moyen de verrouillage (34), le dispositif d'ouverture (18) comprenant au moins un organe de verrouillage (20, 20A, 20B) de l'ouvrant arrière (10) disposé sur l'ouvrant arrière (10) et en prise sur la caisse (6) lorsque l'ouvrant arrière (10) est dans sa première position, le dispositif d'ouverture (18) comprenant un moyen d'actionnement (26) de l'organe de commande (32) et de l'organe de verrouillage (20, 20A, 20B), ce moyen d'actionnement (26) étant disposé sur l'ouvrant arrière (10).

2. Véhicule automobile (1) selon l'une quelconque des revendications précédentes, dans lequel l'organe de commande (32) est disposé sur l'ouvrant avant (8).

3. Véhicule automobile (1) selon la revendication précédente, dans lequel l'ouvrant avant (8) comprend une feuillure avant (14, 14A) et une feuillure arrière (16, 16A), l'organe de commande (32) étant disposé plus proche de la feuillure arrière (16, 16A) que de la feuillure avant (14, 14A).

4. Véhicule automobile (1) selon l'une quelconque des revendications précédentes, dans lequel l'au moins un organe de verrouillage (20, 20A, 20B) comprend un premier organe de verrouillage (20A) et un deuxième organe de verrouillage (20B), le premier organe de verrouillage (20A) étant disposé sur un bord supérieur (22) de l'ouvrant arrière (10) et le deuxième organe de verrouillage (20B) étant disposé sur un bord inférieur (24), le bord supérieur (22) étant disposé au-dessus du bord inférieur (24) relativement à une direction verticale sensiblement parallèle à une direction perpendiculaire au sol sur lequel repose le véhicule automobile (1).

5. Véhicule automobile (1) selon l'une quelconque des revendications précédentes, dans lequel l'ouvrant arrière (10) comprend une feuillure avant (14, 14B) et une feuillure arrière (16, 16B), le moyen d'actionnement (26) étant disposé plus proche de la feuillure avant (14, 14A) que de la feuillure arrière (16, 16B).

6. Véhicule automobile (1) selon l'une quelconque des revendications précédentes en combinaison avec la revendication 3, dans lequel l'ouvrant avant (8) comprend une commande d'ouverture interne (38) plus proche de la feuillure avant (14, 14A) que de la feuillure arrière (16, 16A).

7. Véhicule automobile (1) selon l'une quelconque des revendications précédentes, dans lequel l'organe de commande (32) contrôle électriquement le moyen de verrouillage (34).

8. Véhicule automobile (1) selon l'une quelconque des revendications 1 à 6, dans lequel l'organe de commande (32) contrôle mécaniquement le moyen de verrouillage (34).

9. Véhicule automobile (1) selon l'une quelconque des revendications précédentes, dans lequel le dispositif d'ouverture (18) comprend un moyen de décalage temporel entre l'actionnement de l'organe de commande (32) et l'actionnement de l'organe de verrouillage (20, 20A, 20B).

10. Procédé d'ouverture des ouvrants (8, 10) d'un véhicule automobile (1) selon l'une quelconque des revendications précédentes, comprenant une première étape d'actionnement de l'organe de commande (32) puis une deuxième étape d'actionnement de l'organe de verrouillage (20, 20A, 20B).
